# EUROPÄISCHE PATENTSCHRIFT

(11) **EP 4 586 396 B1**
(45) Veröffentlichungstag und Bekanntmachung des Hinweises auf die Patenterteilung: **09.09.2026**
(21) Anmeldenummer: 24151425.6
(22) Anmeldetag: 11.01.2024
(51) Int. Cl.: H01P 1/04, G01F 23/284, H01Q 1/22

(54) **RADARSENSOR UND HOHLLEITER-TRENNSTELLE**
RADAR SENSOR AND WAVEGUIDE SEPARATING POINT
CAPTEUR RADAR ET SÉPARATEUR DE GUIDE D'ONDES

(43) Veröffentlichungstag der Anmeldung: 16.07.2025
(73) Patentinhaber: VEGA Grieshaber KG, 77709 Wolfach (DE)
(72) Erfinder: KIENZLE, Klaus, 77736 Zell am Harmersbach (DE); LENK, Fritz, 77761 Schiltach (DE)
(74) Vertreter: Maiwald GmbH

(56) Entgegenhaltungen:
- CN-U- 208 536 978
- DE-A1- 102005 036 844
- DE-A1- 102021 131 501
- US-A1- 2009 033 544

## Beschreibung

### Gebiet der Erfindung

Die Erfindung betrifft einen Radarsensor, eine Hohlleiter-Trennstelle, und eine Verwendung der Hohlleiter-Trennstelle.

### Hintergrund der Erfindung

In Radarsensoren, beispielsweise zur Füllstandmessung von Flüssigkeiten und Schüttgütern zur Überwachung industrieller Prozesse, werden von einem HF-Chip erzeugte elektromagnetische Wellen in einen Hohlleiter eingekoppelt, der beispielsweise zu einem Hornstrahler aufgeweitet wird um die leitungsgebundene Welle im Hohlleiter als Raumwelle abzustrahlen oder als Antennenzuführung dient. Wird bei der Einkopplung eine galvanische Trennung eingefügt, entweichen die Wellen aus dem Hohlleiter. Hierbei breiten sie sich entlang von z.B. Gehäuseteilen oder anderen Strukturen aus und werden reflektiert. Durch die damit einhergehenden unterschiedlichen Laufzeiten entsteht eine Interferenz mit den Wellen im Hohleiter. Um dies zu vermeiden, werden Absorber eingesetzt. Der Radarsensor kann so konstruiert sein, dass der Absorber in den Radarsensor innerhalb des Sensorgehäuses eingebracht werden kann. Es bedarf eines logistischen, mechanischen und bezüglich des Sensors eines herstellungstechnischen Aufwands, um den Absorber bereitzustellen, ihn in dem Sensor einzubauen und ihn in seiner bestimmten Position zu halten. Nuten für Dichtungen müssen so eingebracht werden, dass sie die Funktion des Absorbers nicht beeinträchtigen. Die US 2009/033544 A1 beschreibt ein Radar-Füllstandmessgerät mit einem Hohlwellenleiter, der durch einen Spalt in ein erstes, mit einer Antenne gekoppeltes Wellenleiterelement und ein zweites, mit einer Messschaltung gekoppeltes Wellenleiterelement getrennt ist, und einer im Spalt angeordneten dielektrischen Barriere, die ein Wellenelement aufweist, das in den hohlen Wellenleiter eingeführt ist und sich durch mindestens einen Teil des ersten Wellenleiterelements, durch den Spalt und durch mindestens einen Teil des zweiten Wellenleiterelements erstreckt. Die DE 10 2005 036844 A1 beschreibt eine Potentialtrennung für einen Füllstandradar unter Verwendung eines ringförmigen Trennelements zur Isolation eines Hohlleiters.

Die DE 10 2021 131501 A1 beschreibt ein Füllstandmessgerät mit einem Hohlleiter-Segment, das derart angeordnet ist, dass die Radar-Signale zur bzw. von der Antenne übertragbar sind. Ein Trenn-Element trennt das Hohlleiter-Segment galvanisch von der Antenne und schließt das Hohlleiter-Segment staubdicht ab, ohne dass die Radar-Signale absorbiert werden. Die CN 208 536 978 U beschreibt einen Radar-Füllstandanzeiger mit einer Isolierhülse.

### Offenbarung der Erfindung

Eine Aufgabe der Erfindung könnte sein, einen verbesserten Radarsensor bereitzustellen.

Die Aufgabe wird durch die Gegenstände der unabhängigen Patentansprüche gelöst. Vorteilhafte Ausführungsformen sind Gegenstand der abhängigen Ansprüche, der folgenden Beschreibung, sowie der Figuren.

Die beschriebenen Ausführungsformen betreffen in ähnlicher Weise den Radarsensor, die Hohlleiter-Trennstelle und die Verwendung der Trennstelle als Hochfrequenz- (HF-) absorbierendes Bauteil in einem Radarsensor. Synergieeffekte können sich aus verschiedenen Kombinationen der Ausführungsformen ergeben, obwohl sie möglicherweise nicht im Detail beschrieben werden.

Fachbegriffe werden in gewöhnlicher Weise verwendet. Wenn bestimmten Begriffen eine bestimmte Bedeutung zugewiesen wird, werden im Folgenden Definitionen von Begriffen angegeben, in deren Kontext die Begriffe verwendet werden.

Gemäß einem ersten Aspekt wird ein Radarsensor bereitgestellt, der einen Hohlleiter mit der eine Hohlleiter-Innenwandung, einem ersten Abschnitt und einen von dem ersten Abschnitt getrennten zweiten Abschnitt aufweist. Der Hohlleiter weist weiterhin eine Hohlleiter-Trennstelle zur Trennung des ersten Abschnitts von dem zweiten Abschnitt auf, wobei die Hohlleiter-Trennstelle ein Element aus einer ersten Komponente und einer zweiten Komponente unterschiedlichen Materials ist.

Der Hohlleiter leitet zum Senden eines Radarsignals die von einer Elektronikeinheit des Radarsensors erzeugte hochfrequente elektromagnetische Welle von der Elektronikeinheit zu einer Austrittsstelle, z.B. einer Öffnung des Hohlleiters oder einer Antenne. Zum Empfangen eines Radarsignals nimmt die an der Öffnung oder Antenne empfangene Welle den umgekehrten Weg hin zur Elektronikeinheit. Der Hohlleiter weist eine Trennstelle auf, die z.B. zur Potentialtrennung dient. Die Trennstelle trennt damit den Hohlleiter in einen ersten Abschnitt, der mit der Elektronikeinheit verbunden ist, die die Welle in den Hohlleiter einkoppelt, sowie einen zweiten Abschnitt mit der Austrittsöffnung, und ist somit ein Zwischenteil zwischen den beiden Abschnitten.

Auch wenn in dieser Offenbarung beispielhaft die Richtung der Welle von der Elektronikeinheit in Richtung Antenne, also für das Senden beschrieben wird, sind die Ausführungen analog für die umgekehrte Richtung gültig, also für das Empfangen der Welle z.B. an der Antenne und Leiten der Welle von dem zweiten Abschnitt über die Hohlleiter-Trennstelle zu dem ersten Abschnitt und der Elektronik.

Unter "Komponenten" werden hierin Teilstücke oder Teilbereiche verstanden, die die Trennstelle bilden.

In dieser Offenbarung werden Formulierungen wie z.B. "Energie tritt aus dem Hohlleiter heraus" verwendet. Dem Fachmann ist bekannt, dass sich die Hohlleiterwelle im materialfreien Innenraum, der durch die Hohlleiter-Innenwandung des Hohlleiters definiert ist, fortpflanzt. "Aus dem Hohlleiter austreten" bedeutet somit, dass die Energie aus dem Innenraum des Hohlleiters heraustritt. Ähnliche Formulierungen sind entsprechend zu verstehen.

Gemäß dem ersten Aspekt weisen die erste Komponente und die zweite Komponente unterschiedlichen Materials unterschiedliche HF-Eigenschaften auf.

Die unterschiedlichen HF-Eigenschaften der beiden Komponenten der Trennstelle basieren auf den unterschiedlichen Materialien dieser Komponenten auf.

Gemäß dem ersten Aspekt betreffen die unterschiedlichen HF-Eigenschaften eine Absorption und eine Hochfrequenz-Leitfähigkeit.

Die Hochfrequenz-Leitfähigkeit spiegelt sich z.B. in den Zweitoreigenschaften wider, wobei die Zweitoreigenschaften ein Transmissionsfaktor und ein Reflexionsfaktor sind. Weiterhin können die Materialien unterschiedliche elektrische Isolationseigenschaften aufweisen.

Beispielsweise ist die erste Komponente ausgelegt, eine bessere Absorption als die zweite Komponente zur Verfügung zu stellen, während die zweite Komponente eine bessere Isolation als die erste Komponente bietet, und ausgelegt ist, die Welle bei ihrem Weg vom ersten Abschnitt zum zweiten Abschnitt des Hohlleiters möglichst verlustfrei und reflexionsarm durchzulassen. Das heißt, dass z.B., dass die zweite Komponente einen besseren Transmissionsfaktor, z.B. den S12 Parameterwert eines Zweitors aufweist sowie einen besseren Reflexionsfaktor, z.B. den S11- Parameterwert des Zweitors aufweist. In Empfangsrichtung handelt es sich entsprechend um die S21 bzw. S22-Parameterwerte.

Gemäß einer Ausführungsform ist die Form der Hohlleiter-Trennstelle derart ausgestaltet, dass zumindest ein Teil der ersten Komponente den ersten Abschnitt teilweise umschließt und die erste Komponente bessere Absorptionseigenschaften als die zweite Komponente aufweist.

Die erste Komponente weist z.B. einen zylindrischen Teil auf. Der innere Durchmesser dieses Zylinders ist gleich dem Durchmesser des ersten Hohlleiterabschnitts mit gleicher Rotationsachse. Das heißt, die erste Komponente ist nicht oder nur marginal für die Weiterleitung der Hohlleiterwelle zuständig, sondern umgibt den Hohlleiter größtenteils um die an der ersten Komponente austretende Energie zu absorbieren. Der zweite Abschnitt des Hohlleiters kann in diesem zylindrischen Teil so ausgeführt sein, dass er die erste Komponente umschließt und damit auch, durch den zylindrischen Teil getrennt, den ersten Abschnitt in diesem Bereich.

Gemäß einer Ausführungsform ist die Form der Trennstelle derart ausgestaltet, dass die zweite Komponente zumindest teilweise die Hohlleiter-Innenwandung an der Trennstelle fortsetzt und die zweite Komponente bessere Transmissions- und/oder Reflexionseigenschaften als die erste Komponente aufweist.

Die zweite Komponente ist für die elektrische Isolation und die Weiterleitung der Hohlleiterwelle zuständig und weist daher hierfür günstige, oben genannte sowie nachfolgend beschriebene Eigenschaften auf.

Gemäß einer Ausführungsform besteht die zweite Komponente aus einem Low-Loss-Dielektrikum.

"Low-Loss", bezieht sich hierbei auf die Fortführung der Welle. Für die zweite Komponente eignet sich z.B. ein sog. Low Loss Dielektrikum, also ein verlustarmes Dielektrikum, wie z.B. Polypropylen (PP) oder Polytetrafluoräthylen (PTFE), oder andere Materialien mit ähnlichen Eigenschaften, d.h. Isolationswerkstoffe in der Hochfrequenztechnik, die im Hochfrequenzbereich nur geringe Verluste aufweisen.

Für die erste Komponente eignen sich beispielsweise PEEK CF30 oder PTFE CA25, PEEK CF30 ist ein mit 30 % Kohlefasern gefüllter Polyetheretherketon-Werkstoff, während PTFE CA25 25 Gewichtsprozent Kohlenstoff aufweist. Aufgrund der Kohlefasern bzw. des Kohlenstoffs wirken diese Materialien absorbierend, bzw. für Hochfrequenz nahezu undurchlässig.

Gemäß einer Ausführungsform ist die erste Komponente spaltfrei mit der zweiten Komponente verbunden.

Durch diese Maßnahme wird der Austritt an Energie und die Reflexion verringert, und die Transmission verbessert.

Gemäß einer Ausführungsform ist die Verbindung der ersten Komponente mit der zweiten Komponente durch eine oder mehrere der folgenden Art und Weisen miteinander verbunden: eine Verklebung, ein Gewinde, eine Verschweißung und / oder eine Verpressung.

Gemäß einer Ausführungsform ist die Hohlleiter-Trennstelle einstückig.

Die Herstellung der Trennstelle kann beispielsweise durch ein Zweikomponenten-Spritzgussverfahren erfolgen, oder durch Herausdrehen aus vorgefertigtem Zweikomponenten-Stangenmaterial. Durch die einstückige Herstellung wird die Handhabung und die Logistik vereinfacht, sowie der Herstellungsaufwand des Radarsensors verringert.

Gemäß einer Ausführungsform ist der Radarsensor ein Füllstandsensor, ein Grenzstandsensor, ein Durchflusssensor oder ein Drucksensor.

Der Radarsensor wird beispielsweise in einer Anlage der Automatisierungstechnik eingesetzt, wobei der Begriff Automatisierungstechnik hier breit ausgelegt werden soll und u.a. die Prozessautomation und Fabrikautomation beinhaltet. Der Radarsensor wird beispielsweise in einer Prozessanlage zu Überwachung eines chemischen oder physikalischen Prozesses eingesetzt.

Gemäß einer Ausführungsform weist der Radarsensor eine Elektronikeinheit mit einem HF-Bauteil und ein Adapterelement auf, wobei das Adapterelement derart ausgestaltet ist, dass an einer ersten Seite des Adapterelements die Elektronikeinheit und an einer gegenüberliegenden zweiten Seite des Adapterelements sich der erste Abschnitt des Hohlleiters befindet, wobei die Hohlleitertrennstelle an dem Adapterelement anliegt.

Das Adapterelement dient insbesondere der mechanischen Fixierung bzw. Stabilität des Hohlleiters an der Verbindung zur Platine. Das Adapterelement kann sich hierbei radial bis zum Gehäuse des Radarsensors erstrecken. Indem die Hohlleiter-Trennstelle an dem Adapterelement anliegt, wird auch der Hohlleiter selbst mechanisch stabilisiert.

Gemäß einem weiteren Aspekt wird eine Hohlleiter-Trennstelle bereitgestellt, die ein Element aus einer ersten Komponente und einer zweiten Komponente unterschiedlichen Materials ist; wobei die Hohlleiter-Trennstelle eingerichtet ist, einen ersten Abschnitt eines Hohlleiters von einem zweiten Abschnitt des Hohlleiters galvanisch zu trennen.

Die Hohlleiter-Trennstelle ist beispielsweise eine Trennstelle für einen hier beschriebenen Radarsensor. Die Trennstelle trennt z.B. die Elektronik elektrisch von der Antenne.

Gemäß einer Ausführungsform ist zumindest das Material der zweiten Komponente ein nichtleitendes Material, um eine Potentialtrennung des ersten Abschnitts von dem zweiten Abschnitt zu bewirken.

Weitere Ausführungsformen der Trennstelle wurden bereits bezüglich des Radarsensors beschrieben und werden an dieser Stelle daher nicht wiederholt.

Gemäß einem weiteren Aspekt wird eine Verwendung der hier beschriebenen Hohlleiter-Trennstelle in einem Radarsensor bereitgestellt.

Die Trennstelle kann darüber hinaus in anderen Hohlleitervorrichtungen Anwendung finden, bei denen eine Trennung, z.B. eine Potentialtrennung notwendig ist.

Gemäß einer Ausführungsform wird die Hohlleiter-Trennstelle zur Potentialtrennung des Hohlleiters verwendet.

### Kurze Beschreibung der Zeichnungen

Im Folgenden werden Ausführungsbeispiele der Erfindung anhand der schematischen Zeichnungen näher erläutert. Hierbei zeigt
- Fig. 1: ein schematisches Diagramm einer ersten Trennstelle aus einem ersten Material,
- Fig. 2: ein schematisches Diagramm des ersten Serienteils und die dort auftretende Reflexion, Transmission und Austritt von Mikrowellen-Energie aus dem Hohlleiter in die angrenzenden Teile,
- Fig. 3: ein Diagramm, in dem die Transmission (S21) und die Reflexion (S11) des ersten Serienteils in Abhängigkeit der Frequenz aufgetragen ist.
- Fig. 4: ein schematisches Diagramm einer zweiten Trennstelle aus einem zweiten Material,
- Fig. 5: ein schematisches Diagramm der zweiten Trennstelle und die dort auftretende Reflexion, Transmission und Austritt von Mikrowellen-Energie aus dem Hohlleiter in die angrenzenden Teile,
- Fig. 6: ein Diagramm, in dem die Transmission (S21) und die Reflexion (S11) des zweiten Serienteils in Abhängigkeit der Frequenz aufgetragen ist.
- Fig. 7: ein schematisches Diagramm einer dritten Trennstelle aus einem ersten und einem zweiten Material,
- Fig. 8: ein schematisches Diagramm der dritten Trennstelle und die dort auftretende Reflexion, Transmission und Austritt von Mikrowellen-Energie aus dem Hohlleiter in die angrenzenden Teile,
- Fig. 9: ein Diagramm, in dem die Transmission (S21) und die Reflexion (S11) des dritten Serienteils in Abhängigkeit der Frequenz aufgetragen ist.
- Fig. 10: ein schematisches Diagramm einer vierten Trennstelle aus ersten und einem zweiten Material,
- Fig. 11: ein schematisches Diagramm der vierten Trennstelle und die dort auftretende Reflexion, Transmission und Austritt von Mikrowellen-Energie aus dem Hohlleiter in die angrenzenden Teile,
- Fig. 12: ein Diagramm, in dem die Transmission (S21) und die Reflexion (S11) des vierten Serienteils in Abhängigkeit der Frequenz aufgetragen ist.
- Fig. 13: ein schematisches Diagramm einer fünften Trennstelle aus einem ersten und einem zweiten Material,
- Fig. 14: ein schematisches Diagramm der fünften Trennstelle und die dort auftretende Reflexion, Transmission und Austritt von Mikrowellen-Energie aus dem Hohlleiter in die angrenzenden Teile,
- Fig. 15: ein Diagramm, in dem die Transmission (S21) und die Reflexion (S11) des fünften Serienteils in Abhängigkeit der Frequenz aufgetragen ist.
- Fig. 16: eine Skizze eines Radarsensors.

### Ausführungsbeispiele

Einander entsprechende Teile sind in allen Figuren mit den gleichen Bezugszeichen versehen. Die Erfindung wird in erster Linie anhand eines Ausführungsbeispiels erklärt, bei dem die Welle von der Elektronikeinheit in Richtung Antenne geleitet wird. Dieses Beispiel schränkt die Erfindung jedoch nicht ein. Die Ausführungsbeispiele treffen analog auf die umgekehrte Richtung zu.

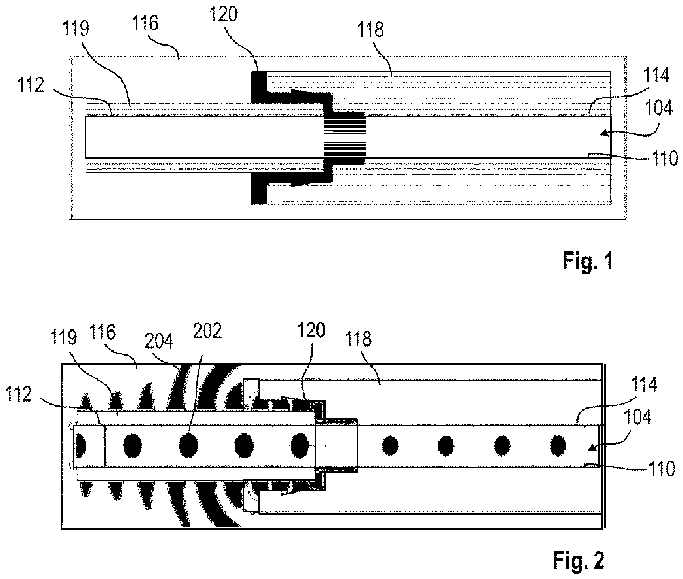

Figuren 1-15 zeigen Varianten einer schematischen Grafik der Hohlleiteranordnung mit fünf unterschiedlichen Ausführungsformen einer Trennstelle, eine Grafik mit der aus bzw. an der Trennstelle austretenden und in verschiedene Bereiche der jeweiligen Hohlleiteranordnung eintretenden Energie, und jeweils ein Kurvendiagramm, bei dem die Zweitor-S-Parameter-über die Frequenz aufgetragen sind.

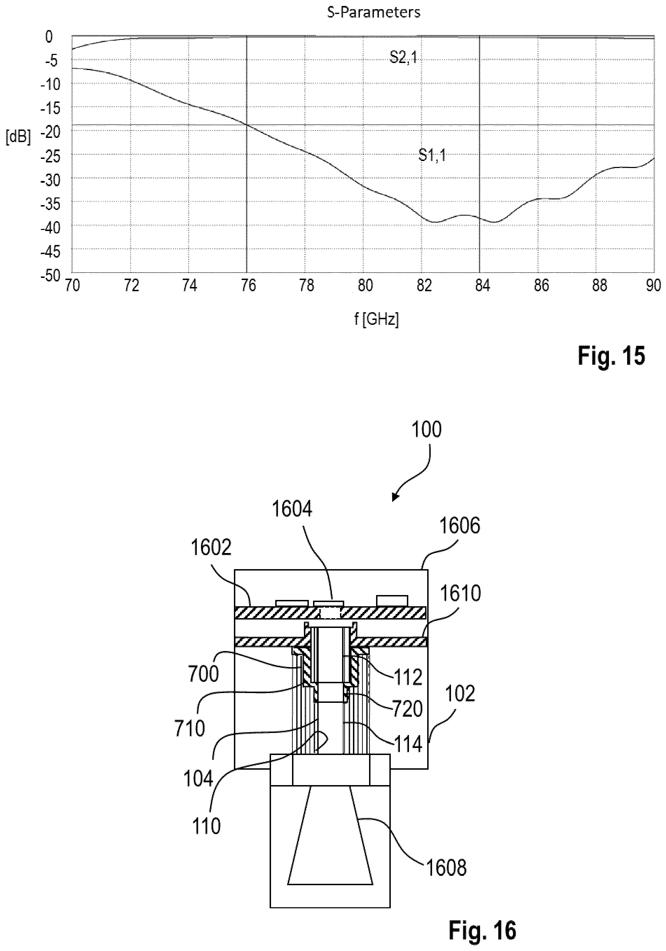

Fig. 16 zeigt eine Skizze eines Radarsensors 100. Der Radarsensor 100 hat ein Gehäuse 1606 und weist eine Elektronikplatine mit einer Elektronikeinheit 1602 auf. Ein dort angebrachter HF-Chip 1604 speist zum Senden eines Radarsignals eine Hochfrequenzwelle in den ersten Abschnitt 112 des Hohlleiters 104 ein. Die Hochfrequenzwelle pflanzt sich über die zweite Komponente 720 der Trennstelle 700 zu dem zweiten Abschnitt 114 des Hohlleiters 104 und schließlich zur Antenne 1608, in Fig. 16 eine Hornantenne 1608, fort. Beim Empfangen des Echosignals ist der Weg der Hochfrequenzwelle entsprechend umgekehrt. Das heißt, die reflektierte Welle wird an der Antenne 1608 empfangen und gelangt über den zweiten Abschnitt 114, die zweite Komponente 720 und den ersten Abschnitt 112 des Hohlleiters 104 mit einer Hohlleiter-Innenwandung 110 zu einem Empfangsmodul auf der Elektronikplatine.

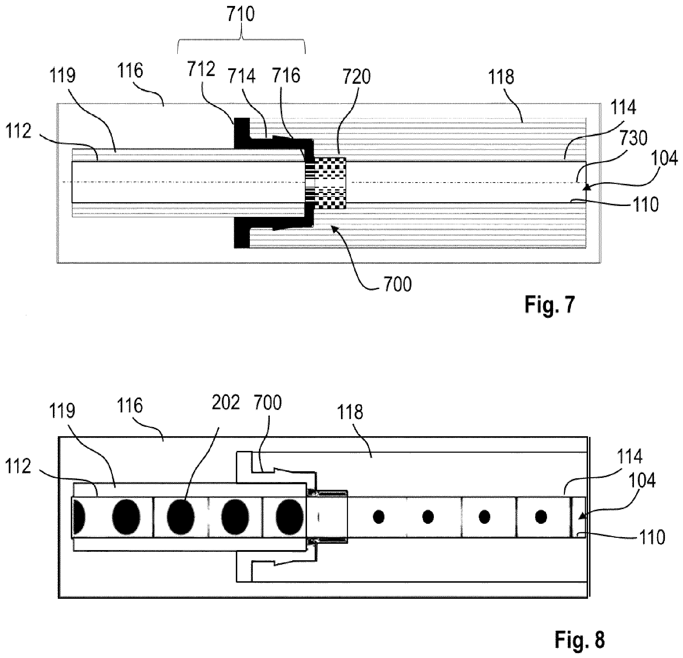

Fig. 1 zeigt ein schematisches Diagramm einer Trennstelle 120 aus einer Komponente, welche ein Teil zur Trennung eines ersten Abschnitts 112 eines Hohlleiters 104 von einem zweiten Abschnitt 114 ist. Eine solche Trennung dient beispielsweise der Potentialtrennung. Die Isolierdicke des Trennteils 120 in Fig. 1-6 bzw. 720 in den Figuren 7-15 ist so dimensioniert, dass kein Kurzschlussstrom z.B. von einem Behälter zur Elektronik 1602 gelangen kann. Das Material der Trennstelle 120 in Fig. 1 leitet die Hochfrequenzwelle und ist gleichzeitig absorbierend. Das Material trägt als Beispiel die Bezeichnung PTFE TFM 1600 mit den Parameterwerten Dielektrizitätszahl (DK-Wert), die bei ca. 2,055 liegt und Verlustfaktor (DF; dissipation factor) tan delta, der bei ca. 0,00073 liegt, gemessen bei einer Frequenz von 80 GHz. Je nach Material können diese beiden Werte frequenzabhängig sein. In den Figuren stößt die Trennstelle, in Fig. 1 die Trennstelle 120, an ein Teil 1610 an, das ein Adapterelement zur mechanischen/und oder elektrischen Anbindung des Hohlleiters 104 sein kann und mit dem Gehäuse 102 des Radarsensors 100 verbunden sein kann, so dass eine mechanische Stabilität erreicht wird. Für Simulationen wurde ein einfacher Aufbau - wie in der Skizze der Figuren 1-15 gezeigt - gewählt. Die mit Längsstrichen markierten Bereiche 118, 119 bilden den ersten Abschnitt 112 bzw. zweiten Abschnitt 114 und damit den Hohlleiter 104, der beispielsweise ein Metallrohr mit einer Bohrung sein kann. Als Materialien eignen sich beispielsweise Silber oder Aluminium, aber auch Edelstahl kann zum Einsatz kommen. Der Bereich 116 ist zumindest für die Simulationszwecke leer, bzw. Luft. Eine von der Elektronikeinheit 1602 des Sensors 100 erzeugte elektromagnetische Hohlleiterwelle wird z.B. in den ersten Abschnitt 112 des Hohlleiters 104 eingespeist und gelangt durch die Trennstelle 120 in den zweiten Abschnitt 114 des Hohlleiters 104.

Fig. 2 zeigt ein schematisches Diagramm des Hohlleiters 104 mit der ersten Trennstelle 120 und die dort auftretende Reflexion, Transmission und den Austritt von Mikrowellen-Energie aus dem Hohlleiter 104 in das Trennstück 700 und in den angrenzenden Bereich 116. In Fig. 2 ist die Reflektion der Hohlleiterwelle im ersten Abschnitt 112 an der Trennstelle 120 erkennbar. Die Kreise 202, die die Energie der sich in dem Hohlleiter 104 fortpflanzenden Hohlleiterwelle darstellen, sind dementsprechend deutlich größer als diejenigen im zweiten Abschnitt 114 des Hohlleiters 104. Ferner tritt ein Teil der Energie an der Trennstelle 120 aus und gelangt durch die massiven Bereiche der Trennstelle 120 in den Bereich 116. Die in Fig. 2 schwarz dargestellten Bereiche 204 stellen hierbei illustrativ die Orte hoher Energie dar. Auffallend ist die starke Energieausbreitung in die Trennstelle 120 und in den angrenzenden Bereich 116. Die Übergänge zwischen den Orten hoher und niedriger Energie sind entgegen der binären schwarz-weiß Darstellung in den Figuren fließend. Stellen mit niedriger Energie, die im Bereich 116 der Fig. 2 nahezu überall vorhanden sind, sind aufgrund dieser binären Darstellung nicht erkennbar. Wünschenswert wäre, dass die Energieverteilung im Hohlleiter 104 in beiden Abschnitten 112, 114 gleich ist, d.h. die Kreise in der Darstellung gleich groß sind, und die schwarz dargestellten Energiebereiche im Bereich 116 verschwinden.

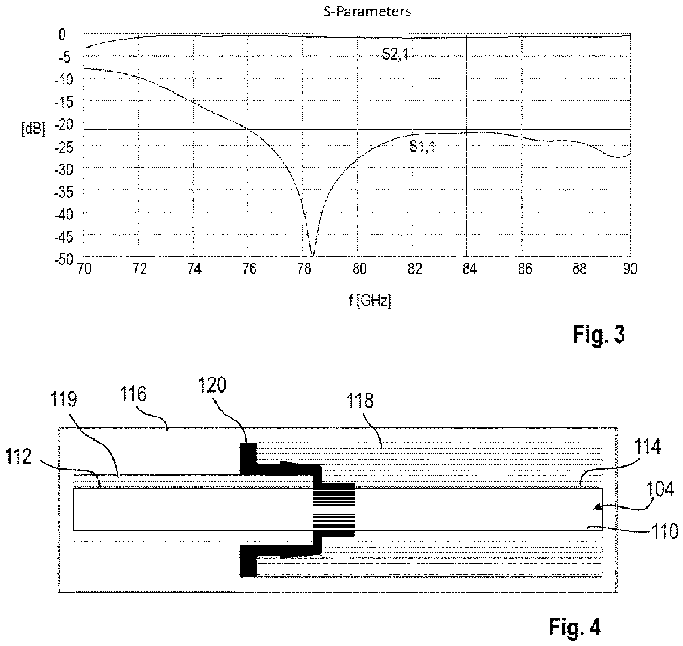

Fig. 3 zeigt ein Diagramm, in dem der Eingangsreflexionsfaktor S11 und der Vorwärtstransmissionsfaktor S21 des ersten Serienteils in Abhängigkeit der Frequenz in einem Frequenzbereich von 70 GHz bis 90 GHz aufgetragen ist. Die Transmission ist über nahezu den gesamten Frequenzbereich konstant. Die Reflexion ist im Bereich von 76 GHz bis 84 GHs unter -21,5 dB mit einem negativen Peak bei ca. 78,2 GHz, an dem der S21 Wert -50 dB beträgt. Bei der in den Figuren 1-15 ausgewählten Vergleichsfrequenz von 80 GHz beträgt der S11-Parameterwert -28,125 dB und der S21-Parameterwert -0,765 dB.

Der Eingangsreflexionsfaktor S11 wird in dieser Beschreibung auch kurz als "Reflexion" bezeichnet, und der Vorwärtstransmissionsfaktor S21 als "Transmission".

Fig. 4 zeigt ein schematisches Diagramm einer Trennstelle 120, die aus einem Material besteht, das trägt die Bezeichnung PEEK CF30 mit den bei 80 GHz gemessenen Parameterwerten DK-Wert 12,32 und DF-Wert tan delta 0,525.

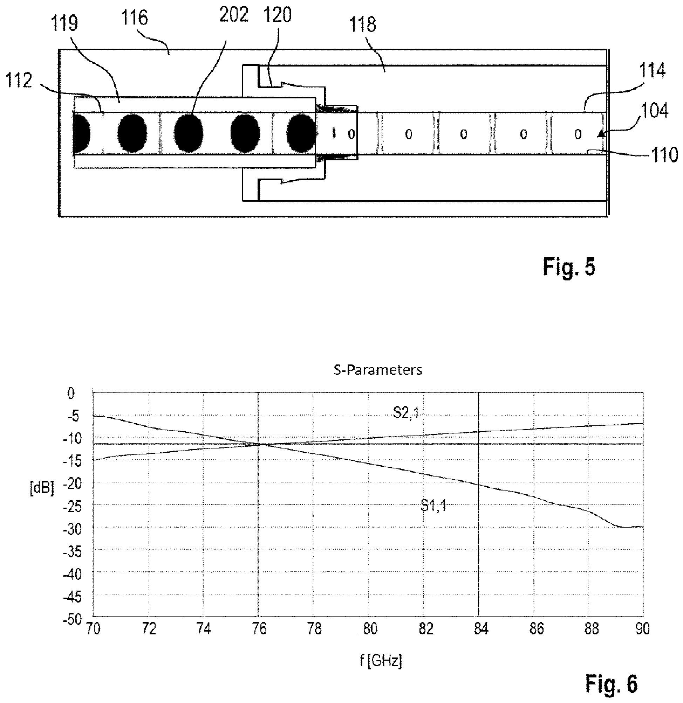

Fig. 5 zeigt eine Grafik der Trennstelle 120 aus Fig. 4 mit der dort auftretenden Reflexion und Transmission sowie dem Austritt von Mikrowellen-Energie aus dem Hohlleiter 104 in das Trennstück 700 und in den angrenzenden Bereich 116. Es ist deutlich zu erkennen, dass in diesem Fall zwar wenig Mikrowellen-Energie aus dem Hohlleiter 104 in die angrenzenden Teile austritt, jedoch eine starke Absorption plus einer kleinen Reflexion statt, so dass eine schwache Transmission in den zweiten Abschnitt 114 des Hohlleiters 104 hinein besteht.

Das zugehörige S-Parameter-Diagramm ist in Fig. 6 abgebildet. Die Transmission ist über nahezu den gesamten Frequenzbereich konstant. Die Reflexion beträgt im Bereich von 76 GHz bis 84 GHs unter -11,5 dB und fällt in etwa linear ab. Bei der in den Figuren 1-15 ausgewählten Vergleichsfrequenz von 80 GHz beträgt der S11-Parameterwert -15,9 dB und der S11-Parameterwert -10,2 dB. Die gute Absorptionseigenschaft wird somit mit schlechten S-Parameterwerten erkauft.

In Fig. 7 ist eine schematische Grafik einer dritten Trennstelle 700 zu sehen. Im Gegensatz zu der ersten und der zweiten Trennstelle 120 besteht die dritte Trennstelle 700 aus einer ersten Komponente 710 aus einem ersten Material und einer zweiten Komponente 720 aus einem zweiten Material. Die erste Komponente 710 ist einfarbig schwarz dargestellt und die zweite Komponente 710 mit einem schachbrettartigen Muster. Das Material der ersten Komponente 710 ist beispielsweise wie in der vorhergehenden Ausführungsform PTFE und das Material der zweiten Komponente 720 PEEK CF30. Die erste Komponente 710 ist topfförmig mit einer senkrecht ausragenden Kante 712, ausgestaltet, wobei die Rotationsachse 712 der Topf-Form mit der Rotationsachse 712 der ringförmigen zweiten Komponente 720 und der Rotationsachse 712 des Hohlleiters 104 zusammenfällt und die Seite 704 der Topf-Form den ersten Abschnitt 112 des Hohlleiters 104 umgeben. Der Boden 716 der Topf-Form weist eine gewisse Dicke auf und hat einen größeren Durchmesser als die Hohlleiter-Innenwandung 110, um die Topf-Form zu bilden. Zudem weist der Boden 716 eine Öffnung auf, die in der Ansicht der Fig. 7 mittels der weißen Linien im Boden 116 angedeutet ist, und deren Durchmesser gleich dem der Innenwandung 110 des Hohlleiters 104 ist. Da diese Komponente 710 direkt an den ersten Abschnitt 112 anschließt, bildet der Boden 716 mit der Öffnung eine Verlängerung des ersten Abschnitts 112 des Hohlleiters 104. Die Seite 714 der Topf-Form mit der ausragenden Kante 712 umhüllt einen Teil des Hohlleiterbereichs 119, also des ersten Abschnitts 112, und dient der elektromagnetischen Abschirmung der Trennstelle 700. Ferner wird die Seite 714 von einem Teil des Hohlleiterteils 118, also dem zweiten Abschnitt 114, umschlossen. An der "Topfoberseite" befindet sich senkrecht nach außen, d.h. radial vom Hohlleiterteil 119 weg, die ausragende Kante 702, die in Fig. 7 und den weiteren Figuren auf einer Seite den Abschluss zum Bereich 116 bildet oder an einem Adapterstück 1610 oder einem anderen Teil des Sensors zum Anliegen kommen kann. Auf der anderen Seite liegt sie an dem Hohlleiterteil 118 an. Die Form der ersten Komponente 710 kann sich von der gezeigten aber auch unterscheiden. Z.B. kann sie auch rechteckig ausgestaltet sein, z.B. falls der Hohlleiter 104 ein Rechteckhohlleiter ist. Ferner müssen Boden 716, Seite 714 und Kante 712 nicht zwangsläufig senkrecht zueinander ausgerichtet sein. Weiterhin kann die Seite 714 auch dicker sein als gezeigt und die ausragende Kante 712 kann fehlen. Weitere Ausgestaltungen sind möglich. Die zweite Komponente 720 ist z.B. wie in Fig. 7 gezeigt zylinderförmig und zum zweiten Abschnitt 114 des Hohlleiters 104 hin orientiert. Sie könnte aber auch spiegelbildlich angeordnet sein, so dass sie zum ersten Abschnitt 112 des Hohlleiters 104 hin orientiert ist. Auch die zweite Komponente 720 setzt die Hohlleiter-Innenwandung 110 fort. Die erste 710 und die zweite 720 Komponente können miteinander z.B. verklebt, verschraubt oder andersartig miteinander verbunden sein. Alternativ kann die Trennstelle 700 einstückig ausgebildet sein.

Fig. 8 zeigt eine Grafik der Trennstelle 700 gemäß Fig. 7 und die dort auftretende Reflexion, Transmission und den Austritt von Mikrowellen-Energie aus dem Hohlleiter 104 in das Trennstück 700 und in den angrenzenden Bereich 116. Im Vergleich zu Fig. 2 ist das Austreten der Energie gering und vergleichbar mit dem Energieaustritt wie in Fig. 5. Die Reflexion ist ähnlich der in Fig. 5, jedoch ist eine deutliche Verbesserung der Transmission zu erkennen.

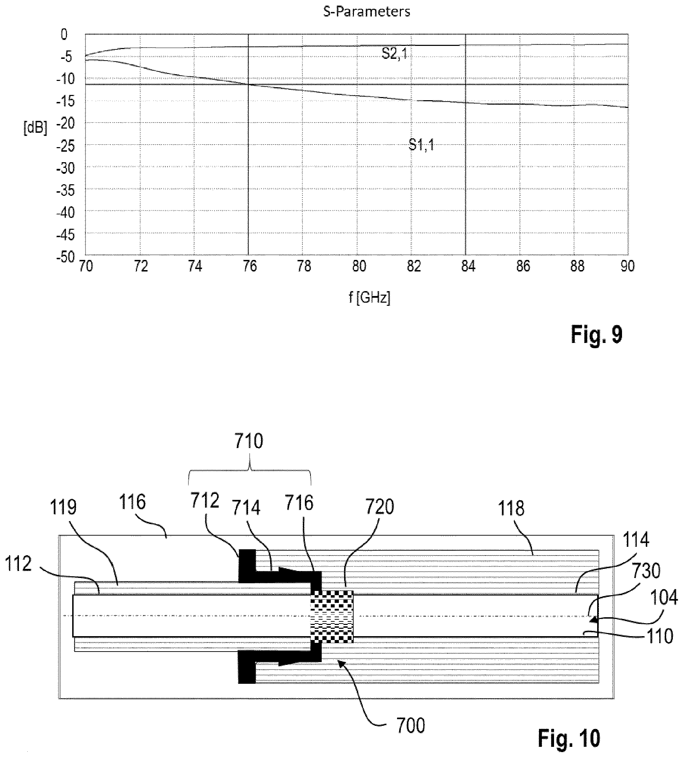

Die Reflexions- und Transmissionsfaktoren S11, S12 der Anordnung aus Fig. 7 und 8 sind in dem Diagramm der Fig. 9 über die Frequenz aufgetragen. Der Reflexionsfaktor S11 liegt im Frequenzbereich zwischen 76 GHz und 80 GHz zwischen ca. -11 dB und -15 dB und ist damit vergleichbar mit dem in Fig. 6 gezeigten. Im Bereich bis 84 GHz ist der Reflexionsfaktor S11 bis zu ca. 4 dB schlechter. Jedoch liegt der Transmissionsfaktor bei -2,5 dB und damit deutlich besser als derjenige der Fig. 6 mit -10 dB +/- 2dB in besagtem Frequenzbereich zwischen 76 und 84 GHz. Die Referenzwerte bei 80 GHz betragen -14 dB für den S11-Parameterwert und -2,6 dB für den S21-Parameterwert. Somit erhält man durch die in Fig. 7 gezeigte Trennstelle 700 aus zwei Komponenten gute Absorptionseigenschaften bei akzeptablem Reflexionsfaktorwert S11 und gutem Transmissionsfaktorwert S21.

In Fig. 10 ist eine schematische Grafik einer Trennstelle 700 aus zwei Komponenten 710, 720 unterschiedlichen Materials in einer alternativen Ausführungsform gezeigt. In dieser Ausführungsform führt die zweite Komponente 720 die Hohlleiter-Innenwandung 110 alleine fort, d.h., die zweite Komponente 720 grenzt sowohl an den ersten Abschnitt 112 des Hohlleiters 104 an als auch an dessen zweiten Abschnitt 114, und weist eine Öffnung auf, durch die die Welle zwischen den Abschnitten 112, 114 passieren kann. Die erste Komponente 710 weist ähnlich wie in der Ausführungsform gemäß Fig. 7 eine Topf-Form auf, bei der der Boden 716 eine Öffnung hat. Diese Öffnung nimmt nun jedoch die zweite Komponente 720 auf, so dass der verbleibende, äußere Rand des Bodens 716 in seiner Dicke die erste Komponente 710 umschließt, das heißt, dass der Bodenrand die erste Komponente 710 zumindest teilweise umschließt. Demgemäß überdecken sich entlang der Rotationsachse 712 vorzugsweise die erste Komponente 710 und die zweite Komponente 720 teilweise, beispielsweise in dem am ersten Abschnitt 112 angrenzenden Bereich, wobei die erste Komponente das Hohlleiterteil 119 umschließt und die zweite Komponente 710 sich zum zweiten Abschnitt 114 hin in Richtung Antenne 1608 ausdehnt. Der sich überdeckende Bereich kann sich aber auch an einer anderen Stelle befinden, z.B. in der Mitte der zweiten Komponente 720 oder in dem zum zweiten Abschnitt 114 angrenzenden Bereich. Der sich überdeckende Bereich kann weiterhin die gesamte zweite Komponente 720 überdecken oder sogar darüber hinausgehen. Das heißt, die Dicke des Randes des Bodens 716 kann gleich oder größer sein als die Länge in Richtung der Rotationsachse 730 der zweiten Komponente 720. Entsprechend der Ausführungen zu Fig. 7 kann die Form des Hohlleiters 104 und der beiden Komponenten 710, 720 variieren, beispielsweise im Falle eines Rechteckhohlleiters. In diesem Fall würde die Rotationsachse 730 einer zentralen Längsachse des Rechteckhohlleiters entsprechen. Die Topf-Form könnte man als rechteckige Topf-Form bezeichnen. Die erste 710 und die zweite 720 Komponente können miteinander z.B. verklebt, verschraubt oder andersartig miteinander verbunden sein. Alternativ kann die Trennstelle 700 einstückig ausgebildet sein. Der Ausdruck "Die Öffnung des Bodens nimmt die zweite Komponente 114 auf" bedeutet hierin nicht, dass die zwei Komponenten bei der Herstellung zusammengesetzt werden, sondern betreffen den Aufbau, der auch in einem einzelnen Herstellungsschritt erfolgen kann, insbesondere um die Trennstelle einstückig herzustellen.

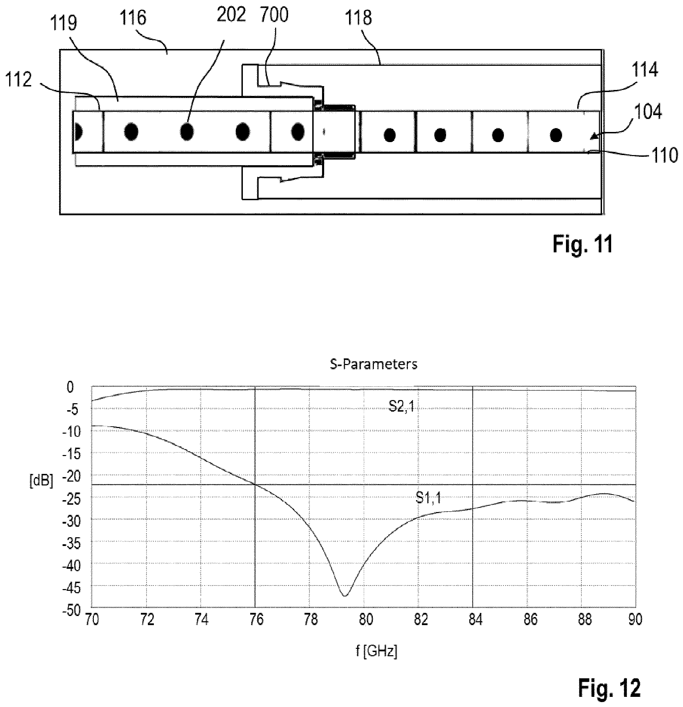

Fig. 11 zeigt eine Grafik der Trennstelle 700 gemäß Fig. 10 und die dort auftretende Reflexion, Transmission und Austritt von Mikrowellen-Energie aus dem Hohlleiter 104 in das Trennstück 700 und in den angrenzenden Bereich 116. Im Vergleich zu Fig. 8 ist das Austreten der Energie etwa gleich. Sowohl bezüglich der Reflexton als bezüglich der Transmission sind jedoch deutliche Verbesserungen zu erkennen, wie auch durch die in Fig. 12 gezeigte Kurve bestätigt wird.

Die Reflexions- und Transmissionsfaktoren S11, S12 der Anordnung aus Fig. 10 und 11 sind in dem Diagramm der Fig. 12 über die Frequenz aufgetragen. Der Reflexionsfaktor S11 liegt im Frequenzbereich zwischen 76 GHz und 80 GHz unter 22 dB mit einem negativen Peak bei knapp 80 GHz, an dem der S11-Wert bei -47 dB liegt. Der Transmissionsfaktor liegt fast durchgängig bei ca. -0,7 dB. Die Referenzwerte bei 80 GHz betragen -40,3 dB für den S11-Parameterwert und -0,7 dB für den S21-Parameterwert. Somit erhält man durch die in Fig. 10 gezeigte Trennstelle 700 aus zwei Komponenten gute Absorptionseigenschaften bei sehr gutem Reflexionsfaktorwert S11 und sehr gutem Transmissionsfaktorwert S21, die die Werte für die Anordnung gemäß Fig. 1 übertreffen, d.h. besser sind als jene. Gegenüber der Anordnung gemäß Fig. 4, die ebenfalls gute Absorptionseigenschaften aufweist, werden die Parameterwerte S11 und S21 deutlich übertroffen.

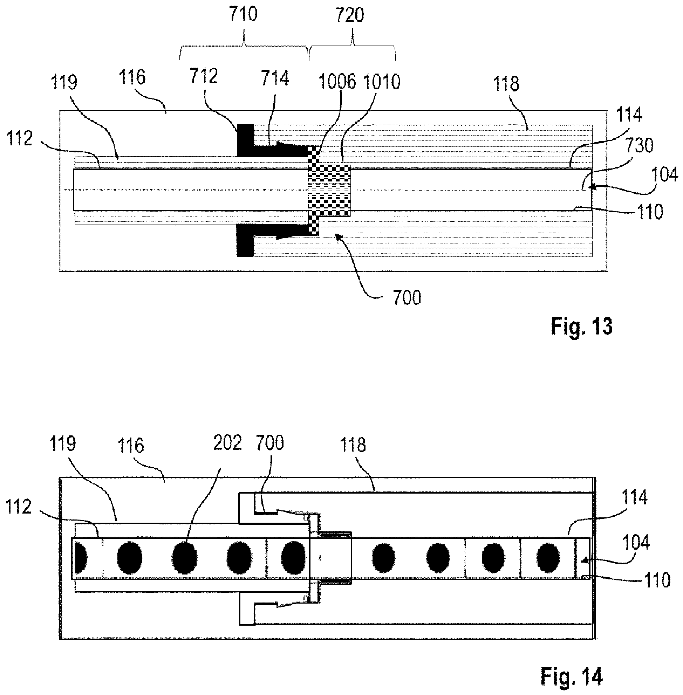

Fig. 13 zeigt eine schematische Grafik der Trennstelle 700 aus zwei Komponenten 710, 720 gemäß einer weiteren Ausführungsform. Der Boden 716 der ersten Komponente 710 wie in den Figuren 7 und 10 gezeigt, ist in dieser Ausführungsform komplett aus dem zweiten Material. Das heißt, die erste Komponente 710 besteht aus einem Zylinder 704, der an einem Ende eine ausragende Kante 712 aufweist und an diesem Ende sowie am gegenüberliegenden Ende in Richtung des zweiten Abschnitts 114 des Hohlleiters 104 offen ist, wo er am gegenüberliegenden Ende an die zweite Komponente 720 angrenzt, bzw. an dieser anliegt. Die zweite Komponente 720 besteht aus einer Scheibe 1006 entsprechend dem Boden 716 aus Figuren 7 und 10 der ersten Komponente 710, wobei die Scheibe 1006 an einer ersten Seite an die erste Komponente 710 angrenzt und an einer zweiten Seite an einen Zylinder 1010. Die erste Komponente 710 umschließt somit vollständig den Hohlleiterteil 119, während die zweite Komponente 710 alleinig die Hohlleiter-Innenwandung 110 zwischen dem ersten 112 und dem zweiten 114 Abschnitt fortsetzt. Auch in diesem Fall sind Varianten wie bereits beschrieben möglich.

Fig. 14 zeigt eine Grafik der Trennstelle 700 gemäß Fig. 13 und die dort auftretende Reflexion, Transmission und Austritt von Mikrowellen-Energie aus dem Hohlleiter 104 in das Trennstück 700 und in den angrenzenden Bereich 116. Im Vergleich zu Fig. 11 ist der Energieaustritt ähnlich, jedoch ist sowohl die Transmission höher und die Reflexion geringer, wie an den etwa gleichen Kreisen in den beiden Abschnitten des Hohlleiters 104 erkennbar ist.

Fig. 15 zeigt ein Diagramm in dem die Transmission (S11) und die Reflexion (S21) der Anordnung gemäß Fig. 12 in Abhängigkeit der Frequenz aufgetragen ist.

Im Vergleich zu Fig. 8 ist das Austreten der Energie etwa gleich. Sowohl bezüglich der Reflexton als bezüglich der Transmission sind jedoch deutliche Verbesserungen zu erkennen, wie auch durch die in Fig. 12 gezeigte Kurve bestätigt wird.

Die Reflexions- und Transmissionsfaktoren S11, S12 der Anordnung aus Fig. 10 und 11 sind in dem Diagramm der Fig. 12 über die Frequenz aufgetragen. Der Reflexionsfaktor S11 nimmt bis ca. 82 GHz auf etwa -40 dB kontinuierlich ab und ist ab 76 GHz unter -19 dB. Der Transmissionsfaktor liegt fast durchgängig bei ca. -0,3 dB. Die Referenzwerte bei 80 GHz betragen -31,7 dB für den S11-Parameterwert und -0,3 dB für den S21-Parameterwert. Somit erhält man durch die in Fig. 13 gezeigte Trennstelle 700 aus zwei Komponenten gute Absorptionseigenschaften bei sehr gutem Reflexionsfaktorwert S11 und sehr gutem Transmissionsfaktorwert S21.

Es können auch Mischformen aus den Trennstellen-Ausführungen der Figuren 7, 10 und 13 gebildet werden. Insbesondere kann die Ausführungsform, die für einen Sensor gewählt wird, von der Frequenz des Sensors abhängen. Ferner können durch Variation der Dimensionen der Trennstelle bzw. der Komponenten der Trennstelle die frequenzabhängigen Zweitorwerte beeinflusst werden.

Andere Variationen der offenbarten Ausführungsformen können vom Fachmann bei der Durchführung der beanspruchten Erfindung durch das Studium der Zeichnungen, der Offenbarung und der beigefügten Ansprüche verstanden und ausgeführt werden. In den Ansprüchen schließt das Wort "umfassend" andere Elemente oder Schritte nicht aus, und der unbestimmte Artikel "ein" oder "eine" schließt eine Vielzahl nicht aus. Ein einzelner Prozessor oder eine andere Einheit kann die Funktionen mehrerer Gegenstände oder Schritte erfüllen, die in den Ansprüchen aufgeführt sind. Die bloße Tatsache, dass bestimmte Maßnahmen in voneinander abhängigen Ansprüchen angegeben sind, bedeutet nicht, dass eine Kombination dieser Maßnahmen nicht vorteilhaft genutzt werden kann. Bezugszeichen in den Ansprüchen sollten nicht so ausgelegt werden, dass sie den Umfang der Ansprüche begrenzen.

### Liste der Bezugszeichen

- 100: Radarsensor
- 102: Gehäuse des Radarsensors
- 104: Hohlleiter
- 110: Hohlleiter-Innenwandung
- 112: erster Abschnitt des Hohlleiters
- 114: zweiter Abschnitt des Hohlleiters
- 116: an den Hohlleiter angrenzender Bereich
- 118: Hohlleiterteil, das den zweiten Abschnitt 112 bildet
- 119: Hohlleiterteil, das den ersten Abschnitt 114 bildet
- 120: Trennstelle
- 202: Hochfrequenz-Energie im Hohlleiter
- 204: entweichende Hochfrequenz-Energie
- 700: Trennstelle aus zwei Komponenten
- 710: erste Komponente der Trennstelle
- 712: ausragenden Kante
- 714: Seite der topfförmigen ersten Komponente, Zylinder
- 716: Boden der topfförmigen ersten Komponente
- 720: zweite Komponente der Trennstelle, Zylinder
- 730: gemeinsame Rotationsachse des Hohlleiters und der Trennstelle
- 1006: Scheibe der zweiten Komponente gemäß einer Ausführungsform
- 1010: Zylinder der zweiten Komponente gemäß einer Ausführungsform
- 1602: Elektronikeinheit, Platine
- 1604: HF-Chip
- 1606: Gehäuse
- 1608: Hornantenne
- 1610: Adapterelement

## Patentansprüche

1. Radarsensor (100), aufweisend
einen Hohlleiter (104), der eine Hohlleiter-Innenwandung, (110), einen ersten Abschnitt (112) und einen von dem ersten Abschnitt getrennten zweiten Abschnitt (114) aufweist; und
eine Hohlleiter-Trennstelle (700) zur Trennung des ersten Abschnitts (112) von dem zweiten Abschnitt (114),
wobei die Hohlleiter-Trennstelle (700) ein Element aus einer ersten Komponente (710) und einer zweiten Komponente (720) unterschiedlichen Materials ist;
**dadurch gekennzeichnet, dass**
die erste Komponente (710) und die zweite Komponente (720) unterschiedlichen Materials unterschiedliche HF-Eigenschaften aufweisen;
wobei die unterschiedlichen HF-Eigenschaften eine Absorption und eine Hochfrequenz-Leitfähigkeit betreffen.

2. Radarsensor (100) gemäß einem der vorhergehenden Ansprüche, wobei die Form der Hohlleiter-Trennstelle derart ausgestaltet ist, dass zumindest ein Teil der ersten Komponente (710) den ersten Abschnitt (112) teilweise umschließt und die erste Komponente (710) bessere Absorptionseigenschaften als die zweite Komponente (720) aufweist.

3. Radarsensor (100) gemäß einem der vorhergehenden Ansprüche, wobei die Form der Trennstelle (700) derart ausgestaltet ist, dass die zweite Komponente (720) zumindest teilweise die Hohlleiter-Innenwandung (110) an der Trennstelle (700) fortsetzt und die zweite Komponente (720) eine bessere Leitfähigkeit als die erste Komponente (710) aufweist.

4. Radarsensor (100) gemäß einem der vorhergehenden Ansprüche, wobei die zweite Komponente (720) aus einem Low-Loss-Dielektrikum besteht.

5. Radarsensor (100) gemäß einem der vorhergehenden Ansprüche, wobei die erste Komponente (710) spaltfrei mit der zweiten Komponente (720) verbunden ist.

6. Radarsensor (100) gemäß einem der vorhergehenden Ansprüche, wobei die Verbindung der ersten Komponente (710) mit der zweiten Komponente (720) durch eine oder mehrere der folgenden Art und Weisen miteinander verbunden sind:
eine Verklebung,
eine Verschweißung,
ein Gewinde, und / oder
eine Verpressung.

7. Radarsensor (100) gemäß einem der Ansprüche 1 bis 5, wobei die Hohlleiter-Trennstelle (700) einstückig ist.

8. Radarsensor (100) gemäß einem der vorhergehenden Ansprüche, wobei der Radarsensor (100) ein Füllstandsensor, ein Grenzstandsensor, ein Durchflusssensor oder ein Drucksensor ist.

9. Radarsensor (100) gemäß einem der vorhergehenden Ansprüche, wobei der Radarsensor (100) eine Elektronikeinheit (1602) mit einem HF-Bauteil (1604) und ein Adapterelement (1610) aufweist, wobei das Adapterelement (1610) derart ausgestaltet ist, dass an einer ersten Seite des Adapterelements (1610) die Elektronikeinheit (1602) und an einer gegenüberliegenden zweiten Seite des Adapterelements (1610) sich der erste Abschnitt (112) des Hohlleiters (104) befindet, wobei die Hohlleiter-Trennstelle (700) an dem Adapterelement (1610) anliegt.

10. Hohlleiter-Trennstelle (100), die ein Element aus einer ersten Komponente (710) und einer zweiten Komponente (720) unterschiedlichen Materials ist;
wobei die Hohlleiter-Trennstelle (700) eingerichtet ist, einen ersten Abschnitt (112) eines Hohlleiters (104) von einem zweiten Abschnitt (114) des Hohlleiters (104) galvanisch zu trennen;
**dadurch gekennzeichnet, dass**
die erste Komponente (710) und die zweite Komponente (720) unterschiedlichen Materials unterschiedliche HF-Eigenschaften aufweisen;
wobei die unterschiedlichen HF-Eigenschaften eine Absorption und eine Hochfrequenz-Leitfähigkeit betreffen.

11. Hohlleiter-Trennstelle (700) nach Anspruch 10, wobei zumindest das Material der zweiten Komponente ein nichtleitendes Material ist, um eine Potentialtrennung des ersten Abschnitts (112) von dem zweiten Abschnitt (114) zu bewirken.

12. Verwendung der Hohlleiter-Trennstelle (700) nach Anspruch 10 oder 11 in einem Radarsensor (100).

13. Verwendung der Hohlleiter-Trennstelle (700) nach Anspruch 10 oder 11 zur Potentialtrennung des Hohlleiters (104).

## Claims

1. A radar sensor (100) comprising
a waveguide (104) comprising a waveguide inner wall (110), a first section (112) and a second section (114) separate from the first section; and
a waveguide separation section (700) for separating the first section (112) from the second section (114),
wherein the waveguide separation section (700) is an element comprising a first component (710) and a second component (720) of different materials;
**characterised in that**
the first component (710) and the second component (720), made of different materials, have different RF properties;
wherein the different RF properties relate to absorption and high-frequency conductivity.

2. The radar sensor (100) according to one of the preceding claims, wherein the shape of the waveguide junction is configured such that at least a portion of the first component (710) partially encloses the first section (112) and the first component (710) exhibits better absorption properties than the second component (720).

3. The radar sensor (100) according to any one of the preceding claims, wherein the shape of the separation section (700) is configured such that the second component (720) at least partially continues the inner wall (110) of the waveguide at the separation section (700), and the second component (720) has better conductivity than the first component (710).

4. The radar sensor (100) according to any one of the preceding claims, wherein the second component (720) consists of a low-loss dielectric.

5. The radar sensor (100) according to any one of the preceding claims, wherein the first component (710) is joined to the second component (720) without any gap.

6. The radar sensor (100) according to any one of the preceding claims, wherein the first component (710) and the second component (720) are joined together by one or more of the following means:
adhesive bonding,
welding,
a threaded connection, and/or
a press fit.

7. The radar sensor (100) according to any one of claims 1 to 5, wherein the waveguide separation section (700) is formed in one piece.

8. The radar sensor (100) according to any one of the preceding claims, wherein the radar sensor (100) is a level sensor, a limit-level sensor, a flow sensor or a pressure sensor.

9. The radar sensor (100) according to any one of the preceding claims, wherein the radar sensor (100) comprises an electronic unit (1602) with an RF component (1604) and an adapter element (1610), wherein the adapter element (1610) is configured such that the electronic unit (1602) is located on a first side of the adapter element (1610) and the first section (112) of the waveguide (104) is located on an opposite second side of the adapter element (1610), wherein the waveguide separation section (700) abuts the adapter element (1610).

10. A waveguide separation section (700) comprising an element made of a first component (710) and a second component (720) of different materials;
wherein the waveguide separation section (700) is configured to electrically isolate a first section (112) of a waveguide (104) from a second section (114) of the waveguide (104);
**characterised in that**
the first component (710) and the second component (720), made of different materials, exhibit different RF properties;
wherein the different RF properties relate to absorption and high-frequency conductivity.

11. The waveguide separation section (700) according to claim 10, wherein at least the material of the second component is a non-conductive material, in order to effect a potential separation of the first section (112) from the second section (114).

12. Use of the waveguide separation section (700) according to claim 10 or 11 in a radar sensor (100).

13. Use of the waveguide separation section (700) according to claim 10 or 11 for potential isolation of the waveguide (104).

## Revendications

1. Capteur radar (100), présentant
un guide d'ondes (104) qui présente une paroi interne de guide d'ondes (110), une première section (112) et une deuxième section (114) séparée de la première section ; et
un séparateur de guide d'ondes (700) destiné à séparer la première section (112) de la deuxième section (114),
le séparateur de guide d'ondes (700) étant un élément composé d'un premier composant (710) et d'un deuxième composant (720) constitués de matériaux différents ;
**caractérisé en ce que**
le premier composant (710) et le deuxième composant (720) constitués de matériaux différents présentent des propriétés HF différentes ;
lesdites propriétés HF différentes concernant une absorption et une conductivité haute fréquence.

2. Capteur radar (100) selon l'une des revendications précédentes, dans lequel la forme du séparateur de guide d'ondes est conçue de telle sorte qu'au moins une partie du premier composant (710) entoure partiellement la première section (112) et que le premier composant (710) présente de meilleures propriétés d'absorption que le deuxième composant (720).

3. Capteur radar (100) selon l'une des revendications précédentes, dans lequel la forme du séparateur (700) est conçue de telle sorte que le deuxième composant (720) prolonge au moins partiellement la paroi interne de guide d'ondes (110) au niveau du séparateur (700) et que le deuxième composant (720) présente une meilleure conductivité que le premier composant (710).

4. Capteur radar (100) selon l'une des revendications précédentes, dans lequel le deuxième composant (720) est constitué d'un diélectrique à faibles pertes.

5. Capteur radar (100) selon l'une des revendications précédentes, dans lequel le premier composant (710) est relié sans interstice au deuxième composant (720).

6. Capteur radar (100) selon l'une des revendications précédentes, dans lequel la liaison entre le premier composant (710) et le deuxième composant (720) est réalisée par un ou plusieurs des moyens suivants :
un collage,
une soudure,
un filetage, et/ou
un assemblage par pressage.

7. Capteur radar (100) selon l'une des revendications 1 à 5, dans lequel le séparateur de guide d'ondes (700) est d'une seule pièce.

8. Capteur radar (100) selon l'une des revendications précédentes, dans lequel le capteur radar (100) est un capteur de niveau de remplissage, un capteur de niveau limite, un capteur de débit ou un capteur de pression.

9. Capteur radar (100) selon l'une des revendications précédentes, dans lequel le capteur radar (100) présente une unité électronique (1602) dotée d'un composant HF (1604) et un élément adaptateur (1610), l'élément adaptateur (1610) étant conçu de telle sorte que, sur un premier côté de l'élément adaptateur (1610) se trouve l'unité électronique (1602) et, sur un deuxième côté opposé de l'élément adaptateur (1610), se trouve la première section (112) du guide d'ondes (104), le séparateur de guide d'ondes (700) étant en contact avec l'élément adaptateur (1610).

10. Séparateur de guide d'ondes (100), qui est un élément composé d'un premier composant (710) et d'un deuxième composant (720) constitué de matériaux différents ;
le séparateur de guide d'ondes (700) étant conçu pour isoler galvaniquement une première section (112) d'un guide d'ondes (104) d'une deuxième section (114) du guide d'ondes (104) ;
**caractérisé en ce que**
le premier composant (710) et le deuxième composant (720) constitués de matériaux différents présentent des propriétés HF différentes ;
lesdites propriétés HF différentes concernant une absorption et une conductivité haute fréquence.

11. Séparateur de guide d'ondes (700) selon la revendication 10, dans lequel au moins le matériau du deuxième composant est un matériau non conducteur, afin de réaliser une séparation de potentiel entre la première section (112) et la deuxième section (114).

12. Utilisation du séparateur de guide d'ondes (700) selon la revendication 10 ou 11 dans un capteur radar (100).

13. Utilisation du séparateur de guide d'ondes (700) selon la revendication 10 ou 11 pour la séparation de potentiel du guide d'ondes (104).
